Europäisches Patentamt

European Patent Office

Office européen des brevets

(11) Publication number: **0 476 798 B1**

# EUROPEAN PATENT SPECIFICATION

(45) Date of publication of patent specification: **07.06.95**  (51) Int. Cl.⁶: **B29C  44/00**, B29C 47/92

(21) Application number: **91301527.7**

(22) Date of filing: **26.02.91**

(54) **Method and apparatus for manufacturing a cross-linked thermoplastic resin foam.**

(30) Priority: **17.09.90 JP 246724/90**

(43) Date of publication of application:
**25.03.92 Bulletin  92/13**

(45) Publication of the grant of the patent:
**07.06.95 Bulletin  95/23**

(84) Designated Contracting States:
**BE DE ES FR GB IT NL**

(56) References cited:
**EP-A- 0 282 848
FR-A- 2 092 000
US-A- 4 201 534
US-A- 4 552 708
US-A- 4 626 183**

**WORLD PATENTS INDEX LATEST Section Ch,
Week 9101, Derwent Publications Ltd., Lon-
don, GB; Class A, AN 91-004894 & JP-A-2 283
421 (FURUKAWA ELECTRIC CO)**

(73) Proprietor: **THE FURUKAWA ELECTRIC CO.,
LTD.
6-1, 2-chome, Marunouchi
Chiyoda-ku
Tokyo (JP)**

(72) Inventor: **Yamamoto, Shunji
B-203, Furukawadenko,
Nakahara-ryo, 2-14-22
Nakahara,
Hiratsuka-shi,
Kanagawa (JP)**
Inventor: **Okada, Mitsunori
808-1 Kamiidacho,
Izumi-Ku
Yokohama-shi,
Kanagawa (JP)**
Inventor: **Kemmotsu, Takaaki
1132 Furukawadenko Shataku,
17-24 Sumiredaira
Hiratsuka-shi,
Kanagawa (JP)**
Inventor: **Hashimoto, Makoto
1391-20 Fukaya
Ayase-shi,
Kanagawa (JP)**

(74) Representative: **Calamita, Roberto et al
Frank B. Dehn & Co.
Imperial House
15-19 Kingsway
London WC2B 6UZ (GB)**

## Description

The present invention relates to a method and an apparatus for manufacturing a cross-linked thermoplastic resin foam, and more specifically, to a method and an apparatus for stably continuously manufacturing a thick cross-linked thermoplastic resin foam having a smooth surface and fine cells with uniform diameters.

Conventionally known are various methods for manufacturing foams by the use of a resin composition which contains a thermoplastic resin, a foaming agent, and a cross-linking agent, as essential ingredients. According to one of these methods, for example, the resin composition is molded into a predetermined shape, such as a sheet, and the resulting molded product is heat-treated under atmospheric pressure, first to decompose the cross-linking agent therein, thereby promoting cross-linking of the thermoplastic resin, and then to decompose the foaming agent, thereby expanding the cross-linked product. In this method, however, the cross-linking and forming are effected in the normal-pressure, high-temperature atmosphere, so that the cells of the resulting foam are coarse and uneven in diameter. Moreover, the foam is deteriorated and made poorer in appearance due to oxidation of the resin composition, and it is hard to obtain a thick foam.

There have conventionally been proposed methods in which a closed pressing machine or die is loaded with such a resin composition as aforesaid, and the composition is heated and expanded under pressure (refer to Published Examined Japanese Patent Applications Nos. 45-40436, 46-2900, and 45-29381). According to these methods, in contrast with the method using the normal-pressure, high-temperature atmosphere, a thick foam having fine uniform cells can be securely obtained. In these methods, however, the resin composition, which consists mainly of the thermoplastic resin compounded with cross-linking agent, and foaming agent, is cross-linked and expanded by being heated under pressure by means of the pressing machine or die. Originally based on the batch system, therefore, these methods can hardly be applied to series production. Thus, the productivity cannot be improved, and it is difficult to manufacture elongated foams due to restrictions on the shape of the pressing machine or die.

Some improved methods have been proposed to solve these problems of the batch system (refer to Published Examined Japanese Patent Application No. 60-51416, U.S. Pat. No. 4,552,708, and Published Unexamined Japanese Patent Application No. 60-11329). In the methods disclosed in Published Examined Japanese Patent Application No. 60-51416 and U.S. Pat. No. 4,552,708 (nearest prior art document), the resin composition is continuously extruded from an extruder into an elongated landed die, which is connected to the extruder, so that a cross-linking reaction is advanced in the first-half stage of the elongated landed die, and gas produced by pyrolytically decomposing the foaming agent is retained in the molten resin composition by dissolution or the like in the second-half stage. Finally, the resin composition is continuously extruded into the atmosphere to be swollen. In order to retain the produced gas in the molten resin composition, a back pressure is applied to the resin composition by means of a throttle die which is located near the outlet of the landed die.

In the method disclosed in Published Unexamined Japanese Patent Application No. 60-11329, all processes, including complete cross-linking and complete decomposition of the foaming agent for the completion of expansion, are executed in an elongated landed die connected to an extruder. According to this method, therefore, the cross-linking and foaming can be finished before a cross-linked thermoplastic resin foam as a final product is continuously obtained from the landed die.

According to the former methods, a pretty high pressure must be applied to retain the gas in the molten resin composition in the second-half stage of the elongated landed die. Therefore, a large-sized, complicated mechanism is needed to retain the high pressure, thus entailing a problem on equipment.

In the case of the latter method, the elongated landed die is expected to be very long, since all the reactions are made therein. On the lower-course side of the landed die, the internal pressure of the die is gradually reduced, and the internal sectional area of the die is gradually increased downstream to allow the swell of the resin composition being expanded. Inevitably, therefore, the shape of the landed die becomes more complicated with distance from its upper-course end. Depending on the field of application of the cross-linked thermoplastic resin foam to be manufactured, moreover, the thickness or expansion ratio of the foam should be changed. In such a case, the elongated landed die attached to the extruder must be replaced with another one having a different shape.

Disclosed in Published Unexamined Japanese Patent Application No. 58-134719, on the other hand, is a method for manufacturing a cross-linked thermoplastic resin foam, in which a polyolefin resin composition containing a cross-linking agent and a foaming agent is heated under a pressure of 1 to 10 $kg/cm^2$ to decompose parts of the cross-linking and foaming agents, thereby forming cell nuclei, and is then heated under normal pressure to decompose the remaining part of the foaming agent. This manufacturing method is based on technical concepts previously disclosed in Published Examined Japanese Patent Applications Nos. 45-40436, 46-2900, etc. According to the method disclosed in Japanese Patent Application No. 45-40436, for example, parts of the cross-linking agent and the foaming agent are decomposed by heating under a pressure of 5 to 50 kg/cm$^2$ to form cell nuclei.

In Published Unexamined Japanese Patent Application No. 58-134719, moreover, there is a description of continuous formation of cell nuclei. Described in these patent applications, however, are only the so-called batch system means as specific means for pressurizing the resin composition and the following methods as means for continuous pressurization. The batch system means include pressurization of the resin composition by means of compressed gas, autoclave, pressing machine, pressure-heating oven, etc. The continuous pressurization means include a method in which the resin composition is sandwiched between two parallel plates to be pressed thereby from both sides, and a method (load-curing) in which the resin composition is wound around a roll face and pressed from the opposite side by means of a belt. In both these continuous pressurization means, moreover, a gas pressure or mechanical force is externally applied to the resin composition to pressurize it. Thus, these pressurization means require a very special complicated pressurization mechanism. Since the resin composition is melted by heating when it is pressurized, moreover, the pressurization is believed to be very difficult. If the melted resin composition is pressed from both sides, for example, it collapses in its thickness direction, so that it is hard to maintain a fixed thickness.

In order to solve these problems, the inventors hereof developed earlier a method in which endless belts are arranged individually on the upper and lower inside surfaces of a die having a cooling region immediately following a heating region, and a resin composition is supported by means of the belts when it is continuously moved in the die. This method has already been proposed in Published Unexamined Japanese Patent Application No. 64-24728. According to this method, partial forms having cell nuclei therein can be manufactured in series. During the manufacture of the foams, however, the endless belts moving in the die are always pressed against the upper and lower inside surfaces of the die under a pressure of 11 to 50 kg/cm$^2$, so that the die surfaces and the belts wear out severely at their sliding contact portions. In consequence, the working life of the die and the endless belts is shortened, and the belts require a large-scale drive unit, inevitably entailing increased equipment cost.

Based on a discovery that decomposing a foaming agent in a closed space, such as a die, filled with a resin composition produces a high pressure of 1,000 kg/cm$^2$ or more, the inventors hereof developed a method in which cell nuclei are formed in the resin composition by utilizing this spontaneous pressure, without externally pressuring the composition by separate means. This method has already been proposed in Published Unexamined Japanese Patent Application No. 2-283421. According to this method, a choke bar is disposed at the outlet of a heating region in a die, and a damping force is applied to a partially foamed product in the heating region by controlling the cross-sectional area of the choke bar. By doing this, a pressure produced by the decomposition of a foaming agent in the heating region is increased to a desired level, and a cross-linking agent and the parts of foaming agent are decomposed in this state.

In the case of this method, the internal pressure of the die can be increased and maintained by operating the choke bar to change the sectional area of the partially foamed product passing the choke bar. Thus, partially foamed products with fine cell nuclei, and hence, cross-linked thermoplastic resin foams with fine cells, can be produced in series. In this case, however, the partially foamed product is still at high temperature and soft when it passes the choke bar. If the damping force is then applied to the molded product, therefore, the flowing state of the product is disturbed, so that a cross-linking reaction or the decomposition of the foaming agent is liable to be uneven. Accordingly, the partially foamed product extruded from the die may possibly be bent, or its surface may be cracked, thus involving a difficulty to stable series production.

A primary object of the present invention is to provide a method and an apparatus for manufacturing a cross-linked thermoplastic resin foam, which enables stable series production of cross-linked thermoplastic resin foams having uniformly distributed fine cells with diameters of 200 $\mu$m or less.

Another object of the present invention is to provide a method and an apparatus for manufacturing a cross-linked thermoplastic resin foam by only additionally using simple equipment, without using an elongated landed die, and therefore, without complicating a configuration on the lower-course side of the landed die.

According to an aspect of the present invention, there is provided the following manufacturing method for a cross-linked thermoplastic resin foam. In this method, a resin composition, which contains at least a thermoplastic resin, a foaming agent, and a cross-linking agent, is extruded into a closed die, which includes at least a molding region, a heating region, and a cooling region, continuously arranged in the order named. The resin composition is molded into a desired shape in the molding region of the die, and is then heated in the heating region to decompose the cross-linking agent and also to decompose at least part of the foaming agent so that cells nuclei are produced, thereby forming a partially foamed product. In the cooling region of the die, the partially foamed product is cooled to a temperature lower than the softening point thereof to be increased in rigidity, and is extruded to the outside of the die while being subjected to a damping force as it moves in the cooling region. The partially foamed product, extruded from the die, is heated under atmospheric pressure to expand the foaming agent fully, whereupon a final product is obtained.

Preferably, the resin composition is partially expanded so that there is a relation $M1/M2 \leq 0.525$ ($M1 \geq 1.05$, $M2 \geq 2.00$), more preferably $0.05 \leq M1/M2 \leq 0.35$, where $M1$ and $M2$ are the expansion ratios of the partially foamed product and the final product, respectively.

The resin composition is extruded into the die so that the internal pressure of the die in the heating region ranges from 10 to 70 kgf/cm$^2$.

According to another aspect of the present invention, there is provided the following manufacturing apparatus for a cross-linked thermoplastic resin foam. In this apparatus, an extruder extrudes a resin composition containing at least a thermoplastic resin, a foaming agent, and a cross-linking agent. A closed die, which is directly jointed with an outlet of the extruder, includes at least a molding region, a heating region, and a cooling region. In the molding region, the resin composition fed from the extruder is molded into a desired shape. In the heating region, the resin composition molded into the desired shape is heated to decompose the cross-linking agent and also to decompose at least part of the foaming agent so that cell nuclei are produced, thereby forming a partially foamed product. In the cooling region, the partially foamed product is cooled to a temperature lower than the softening point thereof, and a damping force is applied to the partially foamed product when the cooled partially foamed product moves in the cooling region. Heat foaming means is used to heat the partially foamed product, extruded from the die, under normal pressure to expand the foaming agent fully, thereby obtaining a final product.

The cooling region of the die includes a sectional area portion narrower than the inlet sectional area thereof, on the outlet side of the position where the partially foamed product is cooled to the temperature lower than the softening point thereof.

Preferably, the cooling region of the die has a profile such that the sectional area of the partially foamed product moving through the cooling region gradually decreases.

More preferably, the cooling region of the die is formed so that there is a relation $0.50 \leq S2/S1 \leq 0.90$, where $S1$ and $S2$ are the inlet sectional area of the cooling region and the sectional area of the cooling region at the position where the partially foamed product is cooled to the temperature lower than the softening point thereof, respectively.

Further preferably, sectional area varying means capable of varying the sectional area of the partially foamed product is located at the desired position of the cooling region where the partially foamed product is cooled to the temperature lower than the softening point thereof, whereby the damping force is applied to the partially foamed product.

According to the method of the present invention, the inside of the die is divided successively into the three regions, the molding region, heating region, and cooling region, and the damping force is applied to the partially foamed product by means of the sectional area varying means, such as a choke bar or throttle means connected to the cooling region, thereby increasing the internal pressure of the die. Fine cell nuclei are produced in the heating region by doing this, and are kept in a frozen state. The expansion ratio of the partially foamed product is controlled in association with that of the cross-linked thermoplastic resin foam to be obtained, so that the cells of the resulting foam can be made fine and uniformly distributed. Thus, cross-linked thermoplastic resin foams having a smooth surface and fine cells with uniform diameters can be continuously manufactured with stability, providing a very high industrial utility value.

In the accompanying drawings:

Fig. 1 is a graph showing the relationships between the diameters of cell nuclei in a partially foamed product obtained after pressure removal and the diameters of cells in a cross-linked thermoplastic resin foam after reheating;

Fig. 2 is a graph showing the relationships between the distribution density of cell nuclei and the cell diameters obtained after reheating;

Fig. 3 is a graph showing the relationships between set pressures used at the time of heating for the production of cell nuclei and the cell diameters obtained after reheating;

Fig. 4 is a schematic side view showing an example of an apparatus used in a method according to the present invention;

Fig. 5A is a view showing an example of a cooling region;

Fig. 5B is a cross-sectional view taken along line VB-VB of Fig. 5A;

Fig. 6 is a side sectional view showing another example of the cooling region;

Fig. 7 is a sectional view of a choke bar taken along line VII-VII of Fig. 4;

Fig. 8 is a sectional view taken along line VIII-VIII of Fig. 7;

Fig. 9 is a side sectional view illustrating throttle means;

Fig. 10 is a sectional view taken along line X-X of Fig. 9;

Fig. 11 shows a microphotograph of a sectional texture of the partially foamed product; and

Fig. 12 shows a microphotograph of a sectional texture of the cross-linked thermoplastic resin foam.

The present invention is based on information obtained from experiments conducted by the inventors hereof.

First, 100 parts by weight of low-density polyethylene, 10 parts by weight of azodicarbonamide (foaming agent: decomposition temperature at 190°C), and 0.8 parts by weight of dicumyl peroxide (cross-linking agent) were uniformly kneaded to prepare a resin composition. Then, the composition was formed into sheets of 2-mm thickness at a temperature of 130°C by means of a pressing machine. The resulting sheets were heated at 190°C under various pressures for 8 minutes to decompose part of azodicarbonamide, and were then cooled to a temperature not higher than their softening point, whereupon the pressure was removed.

The respective profiles of the resulting sheets were observed by means of an electron microscope. Thereupon, it was indicated that very fine cell nuclei were uniformly distributed, although the size of the cell nuclei varied depending on the set pressures for the heating at 190°C. The diameters of the cell nuclei were measured.

Subsequently, the sheets were introduced into a constant-temperature bath under the atmospheric pressure, and were reheated at 220°C for 10 minutes to form cross-linked thermoplastic resin foams. The respective profiles of these individual cross-linked thermoplastic resin foams were also observed by means of the electron microscope, and the diameters of cells were measured.

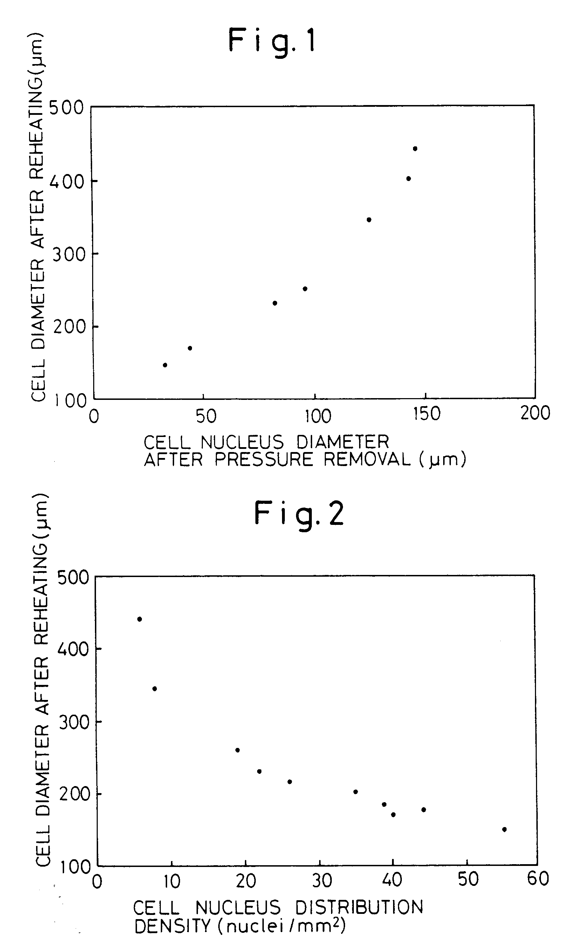

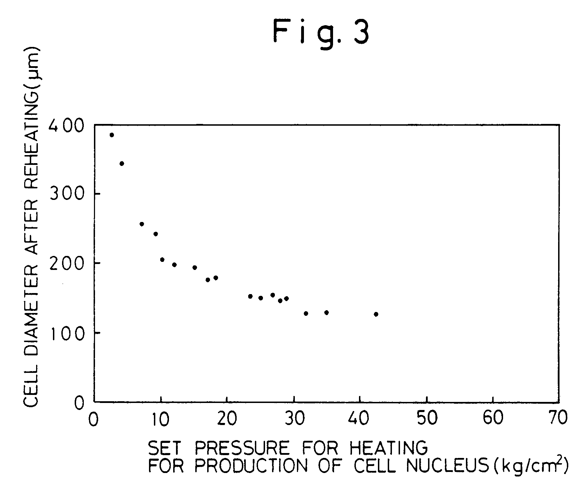

Fig. 1 shows the relationships between the diameters of the cell nuclei in the sheets obtained after the pressure removal and the cell diameters obtained after reheating. Fig. 2 shows the relationships between the distribution density of the cell nuclei and the cell diameters obtained after reheating. Fig. 3 shows the relationships between set pressures for the production of the cell nuclei and the cell diameters obtained after reheating.

As seen from Figs. 1 to 3, the cells in the cross-linked thermoplastic resin foams are fine if the pressure applied for partial foaming is high, and a pressure of 10 $kg/cm^2$ or more must be applied to the sheets in order to form cells of 200 $\mu m$ or less (Fig. 3). Further, there is a substantially linear relationship between the respective diameters of the cell nuclei and the cells in the cross-linked thermoplastic resin foams (Fig. 1), and those cross-linked thermoplastic resin foams whose cell nucleus distribution density is higher can contain finer cells (Fig. 2).

Thus, in order to manufacture cross-linked thermoplastic resin foams with fine uniform cells, it is essential to form fine cell nuclei at high distribution density by partial foaming of the resin composition under pressure at the same time with cross-linking. After this is done, the previously cross-linked resin restrains the cells from being coarsened by the communication between the adjacent cell nuclei, despite the heating under normal pressure. As a result, cross-linked thermoplastic resin foams with uniformly distributed fine cells can be obtained.

A method according to the present invention will now be described in detail with reference to the accompanying drawings.

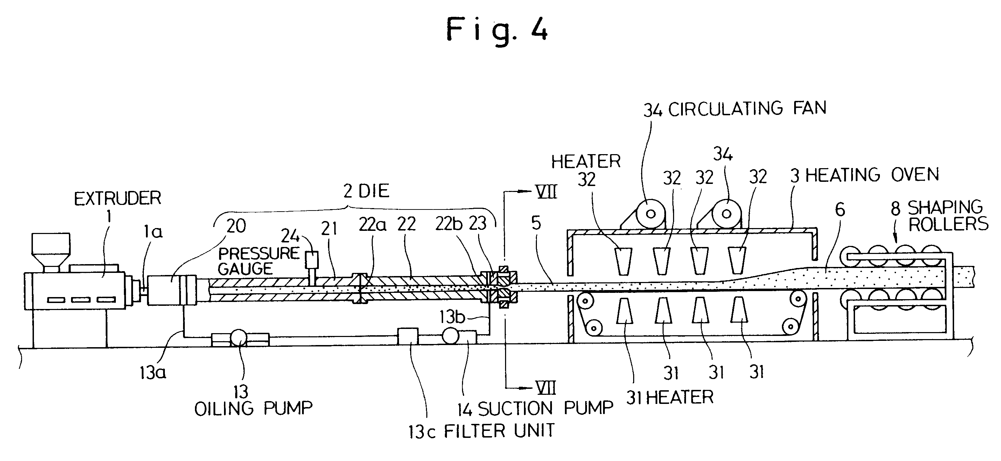

Fig. 4 is a schematic view showing an example of an apparatus used for effecting the method according to the present invention.

In Fig. 4, the apparatus generally comprises an extruder 1 for the resin composition, a die 2 connected to an outlet 1a of the extruder 1, and a heating oven 3 located on the lower-course side of the die 2, these components being arranged in series.

The die 2 includes a molding region 20, a heating region 21, and a cooling region 22 continuously arranged in the order named from the upper-course side (side of the outlet 1a of the extruder). Disposed at the outlet of the cooling region 22 is sectional area varying means 23 which can vary the sectional area of a partially foamed product (mentioned later) pushed out through the outlet.

The cross-linked thermoplastic resin foam to be manufactured moves in the apparatus in the following manner as a whole.

The resin composition extruded from the extruder 1 is molded into a desired shape in the molding region 20, converted into a partially foamed product 5 in the heating region 21, cooled to a temperature lower than its softening point in the cooling region 22, and then extruded from the die 2 via the sectional area varying means 23. Subsequently, the partially foamed product is introduced directly into the heating oven 3 under normal pressure, whereupon it is heated to a predetermined temperature to be formed into a cross-linked thermoplastic resin foam 6 as a final product.

At this time, the extruder 1 and the die 2, formed of the forming, heating, and cooling regions 20, 21 and 22, are closely in contact with each other, and are full of the resin composition (and its partially foamed product). If the extruder 1 or the die 2 is not filled with the resin composition, the internal pressure of the die 2 can be neither increased nor maintained even if a damping force is applied to the partially foamed product mentioned later.

In this general flow of processes, a thermoplastic resin, a foaming agent, and a cross-linking agent, as essential ingredients, are uniformly mixed in the extruder 1 to prepare a resin composition of a predetermined make-up. This uniform mixing is effected using a temperature at which neither of the foaming agent and the cross-linking agent can be decomposed.

The thermoplastic resin used may be, for example, polyethylene; polypropylene; ethylene copolymer, such as ethylene-propylene copolymer, ethylene-vinyl acetate copolymer, or ethylene-ethyl acrylate copolymer; polyvinyl chloride; or a mixture of these materials. Also, this thermoplastic resin may be blended with a suitable amount of additives, such as a conventional pigment, antioxidant, ultraviolet absorber, fire retardant, antistatic agent, anti-fungus agent, inorganic filler, etc.

The foaming agent used may be selected from any ones of a decomposition type which can be pyrolytically decomposed to produce gas, such as nitrogen gas, carbon dioxide gas, etc., during the process of heating in the die 2 mentioned later. These materials include, for example, azodicarbonamide, dinitrosopentamethylenetetramine, 4,4'-oxybis(benzene sulfonyl hydrazide), azobisisobutyronitrile, etc.

The contents of these foaming agents are suitably selected depending on the expansion ratio of the foam to be obtained. Usually, they range from 5 to 30 parts by weight compared with 100 parts by weight for the aforesaid thermoplastic resin, preferably from 7 to 20 parts by weight. If necessary, a suitable amount of various assistants or nucleators may be added to these foaming agents.

The cross-linking agent, for use as a third essential ingredient of the resin composition, may be selected from ones whose decomposition temperature is not lower than the melting start temperature of the thermoplastic resin. These materials include, for example, dicumyl peroxide, di-t-butyl peroxide, t-butyl cumyl peroxide, 2,5-dimethyl-2,5-di(t-butyl peroxy) hexane, 2,5-dimethyl-2,5-di(t-butyl peroxy) hexyne-3, etc.

The contents of these cross-linking agents are suitably selected depending on the degree of cross-linking of the cross-linked thermoplastic resin foam, as a final product to be obtained, and the molecular structure of the thermoplastic resin. Usually, they range from 0.2 to 5.0 parts by weight compared with 100 parts by weight for the thermoplastic resin, preferably from 0.3 to 3.0 parts by weight, and more preferably from 0.3 to 1.0 part by weight.

The resin composition obtained by uniformly mixing these ingredients is continuously extruded from the extruder 1 to the die 2 through the outlet 1a. The resin composition extruded out through the outlet 1a of the extruder 1 is first molded into a predetermined shape in the molding region 20. In doing this, a molded product of any desired shape, such as a sheet-, plate-, or rod-shaped product, can be obtained by suitably selecting the die shape in the molding region 20.

After passing the molding region 20, the molded product is transferred to the heating region 21. While moving through the heating region 21, the molded product is heated to a predetermined temperature by heating means (not shown), such as molded-in heaters or planar heating elements provided on the upper and lower surfaces of the die. As a result, the cross-linking agent contained in the molded product is pyrolytically decomposed, so that the cross-linking of the thermoplastic resin advances. At the same time, the foaming agent in the molded product is partially decomposed to form fine cell nuclei uniformly distributed in the product, whereupon the molded product is converted into the partially foamed product 5.

Preferably, the cross-linking of the partially foamed product 5, obtained in this manner, is at a degree such that the residual gel weight fraction obtained when the product 5 is subjected to 24 hours of extraction in a xylene solution of $120°C$ is 5% or more. If the cross-linking degree is such that the residual gel weight fraction is less than 5%, the cells in the finally obtained cross-linked thermoplastic resin foam 6 is liable to become coarse.

In the initial stage of this decomposition process, the foaming agent in the molded product is partially decomposed. The decomposition of the foaming agent, that is, partial foaming of the molded product, is effected so that there is a relation $M1/M2 \leq 0.525$ ($M1 \geq 1.05$, $M2 \geq 2.00$), where $M1$ and $M2$ are the expansion ratio of the partially foamed product 5 extruded from the die 2 and the expansion ratio of the cross-linked thermoplastic resin foam 6 to be finally obtained, respectively. In this case, the foaming agent should only be decomposed so that the aforesaid requirement is fulfilled. The amount of decomposition of the foaming agent preferably ranges from 20 to 95% of the foaming agent content of the resin composition, more preferably from 30 to 90%, and further preferably from 50 to 90%.

If the value of M1 is smaller than 1.05 for the expansion ratio (M1 < 1.05), sufficient cell nuclei cannot be formed in the partially foamed product 5, the cells in the cross-linked thermoplastic resin foam 6 cannot be fine, and their distribution is uneven.

If the partially foamed product 5 is subject to a relation M1/M2 > 0.525, the partially foamed product 5 undergoes a substantial natural expansion, which is liable to cause cracks or the like in the surface, when the product 5 is extruded from the die 2.

Preferably, the relationship between M1 and M2 is given by $0.05 \leq M1/M2 \leq 0.35$, more preferably $0.05 \leq M1/M2 \leq 0.2$.

The expansion ratio M1 of the partially foamed product 5 is controlled by suitably selecting the respective temperatures of the heating and cooling regions 21 and 22.

After passing the heating region 21, the partially foamed product 5 is transferred to the cooling region 22 in the next stage, whereupon it is cooled to a temperature lower than its softening point and given a damping force.

If the partially foamed product 5 is only insufficiently cooled in the cooling region 22 so that the product 5 is at a temperature not lower than its softening point when it is extruded from the die 2, the product 5, which is softened, is naturally expanded by the pressure of the gas therein. As a result, destruction of the resulting fine cell nuclei advances, and the surface of the product 5 cracks.

If the partially foamed product 5 in the cooling region 22, moving in the extruding direction, is subjected to a damping force to resist its movement, a spontaneous pressure attributable to the decomposition of the foaming agent in the resin composition can be confined to maintain the internal pressure of the die 2. This damping force, unlike the one described in Published Unexamined Japanese Patent Application No. 2-283421, is applied to the partially foamed product when it is cooled to a temperature lower than its softening point in the cooling region, that is, when its rigidity is increased. Having the increased rigidity, the partially foamed product constitutes, so to speak, an obstacle to the escape of the pressure produced by the decomposition of the foaming agent in the heating region 21, from the die 2 through its outlet into the atmosphere, so that a closed system is formed ranging from the extruder to the outlet portion of the die 2. Accordingly, the pressure is confined to the die, that is, the internal pressure of the die 2 can be kept at a desired value. Thus, the internal pressure of the die 2 can be efficiently increased without disturbing the flow of resin composition in the heating region 21, or bending or cracking the partially foamed product 5 extruded from the die 2. In this manner, the fine cell nuclei in the product 5 can be uniformly generated and maintained, and the product 5 can be extruded with stability.

In order to distribute fine cells of 200 $\mu$m or less uniformly in the cross-linked foam 6 to be obtained, the internal pressure of the die 2 is preferably controlled so as to range from 10 to 70 kg/cm². This internal pressure is suitably selected in consideration of the target cell diameter. If the internal pressure of the die 2 is lower than 10 kg/cm², the cell diameters of the resulting cross-linked thermoplastic resin foam 6 are greater than 200 $\mu$m, and their distribution is uneven, as shown in Fig. 3. If the internal pressure is higher than 70 kg/cm², on the other hand, its effect reaches the limit, and the apparatus must have a pressure-resistant structure as a whole.

The internal pressure of the die 2 is measured by means of a pressure gauge 24 mounted in the heating region 21, for example, as shown in Fig. 4.

Thus, the pressure of the gas produced due to the decomposition of the foaming agent in the heating region 21 is confined to maintain the internal pressure of the die 2 by applying the damping force to the partially foamed product 5. To attain this, according to the present invention, it is advisable to design the cooling region 22 itself in the following manner.

First, the internal profile of the cooling region 22 is preferably designed so that the sectional area of the region 22, through which the partially foamed product 5 moves, gradually decreases from an inlet 22a, serving as a junction to the heating region 21, toward an outlet 22b of the region 22.

In this case, moreover, the internal profile of the cooling region 22 is preferably designed so that there is a relation $0.50 \leq S2/S1 \leq 0.90$, where S1 and S2 are the sectional area of the cooling region 22 on the side of the inlet 22a and the outlet-side sectional area of the region 22 at the position where the partially foamed product 5 is fully cooled to a temperature lower than its softening point, respectively. Generally, it is advisable to use the portion corresponding to the sectional area S2 as the outlet 22b of the cooling region 22.

If there is a relation S2/S1 > 0.90, the damping force applied to the partially foamed product is too small to increase the internal pressure of the die 2, so that the effects of stably freezing and maintaining the fine cell nuclei generated in the heating region 21 are dampened. If there is a relation S2/S1 < 0.5, on the other hand, the damping force applied is so great that the internal pressure of the die 2 sometimes increases suddenly. As a result, it is difficult to adjust the internal pressure of the die 2, and at the same time, the apparatus must have a large-scale pressure-resistant structure, as a whole, to cope with production of excessive pressure.

Preferably, there should be a relation $0.70 \leq S2/S1 \leq 0.90$, more preferably $0.65 \leq S2/S1 \leq 0.80$.

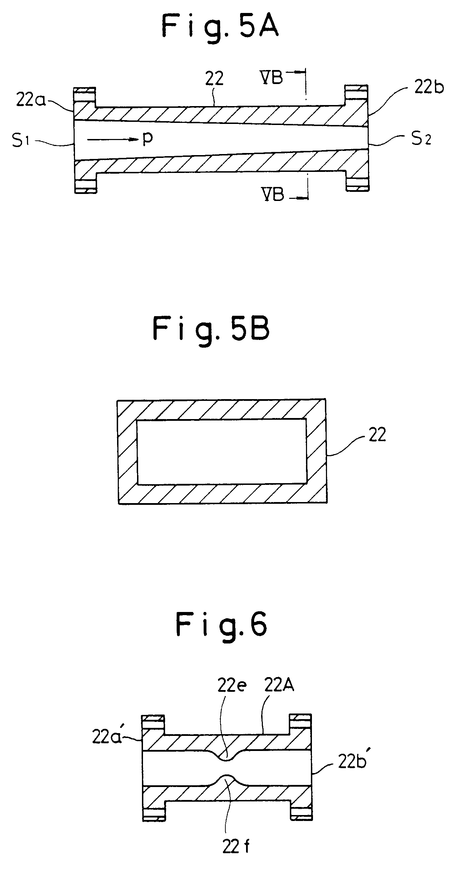

If the cross-linked thermoplastic resin foam 6 to be obtained is a plate member, it is to be desired that the cooling region 22 should have the internal profile shown in Figs. 5A and 5B. More specifically, the passage profile of the partially foamed product is rectangular, and the sectional area of the rectangular profile is gradually reduced from the inlet 22a connected to the heating region 21 toward the outlet 22b. In other words, the cooling region 22 is narrowed toward the outlet side in the advancing direction of the partially foamed product indicated by arrow $\underline{p}$ in Fig. 5A. In this arrangement, the damping force also acts on the partially foamed product in the heating region 21 and the molding region 20, so that the spontaneous pressure attributable to the decomposition of the foaming agent in the resin composition can be confined to keep the internal pressure of the die 2 at a desired value.

The internal profile of the cooling region 22 is not limited to the gradually narrowed shape. As shown in Fig. 6, for example, opposite projections 22e and 22f may be formed individually on the upper and lower portions of the inner wall of the cooling region 22 which constitutes part of a passage for the partially foamed product. In this case, the relation between the sectional area S2 defined by the projections 22e and 22f and the area S1 of a junction surface 22a' is set as aforesaid.

Preferably, the inner wall portions corresponding to the projections 22e and 22f should be located at positions where the partially foamed product flowing inside is cooled to a temperature lower than its softening point.

The internal profile of the cooling region 22 may be designed so that only its height gradually decreases toward the outlet side without a change of its width, or only the width gradually decreases toward the outlet without a change of the height.

The application of the damping force to the partially foamed product and the maintenance of the internal pressure of the die 2, which utilizes the spontaneous pressure attributable to the decomposition of the foaming agent in the resin composition, can be more efficiently achieved by using the sectional area varying means 23 additionally provided at the outlet 22b of the cooling region 22.

The sectional area varying means 23 may be formed of, for example, a choke bar, which will be mentioned later.

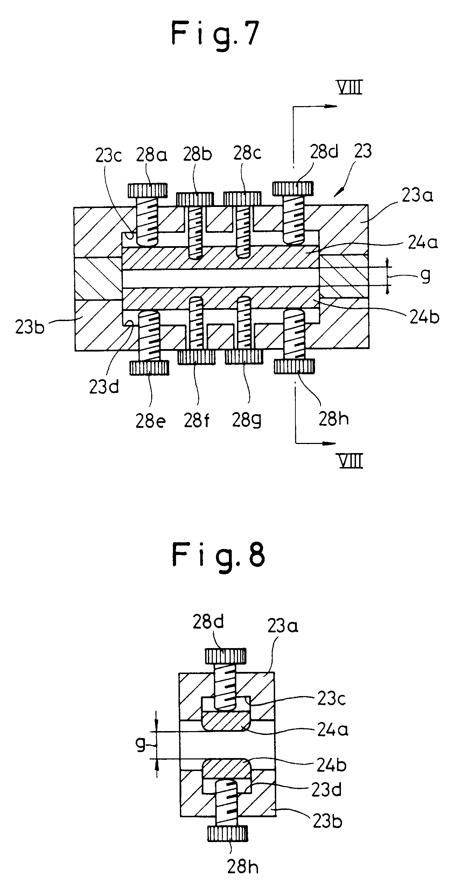

Fig. 7 is a sectional view taken along line VII-VII of Fig. 4, and Fig. 8 is a sectional view taken along line VIII-VIII of Fig. 7. As shown in Figs. 7 and 8, a choke bar fixing frame is attached to the outlet 22b of the cooling region 22. The fixing frame, which is rectangular as a whole, is composed of upper and lower frames 23a and 23b which have grooves 23c and 23d, respectively, extending transversely so as to face each other.

The proximal end portions of two choke bar bodies 24a and 24b are fitted in the grooves 23c and 23d of the fixing frame, respectively, so as to be mounted on the upper and lower frames 23a and 23b, respectively, by means of adjust screws 28a to 28h.

When the adjust screw 28a to 28h of the choke bar 23 are moved vertically, the choke bar bodies 24a and 24b connected to these screws also move vertically in the grooves 23c and 23d, respectively. Thus, a gap $\underline{g}$ between the bodies 24a and 24b can be freely adjusted by operating the adjust screws. By widening or narrowing the gap $\underline{g}$ depending on the extrusion state of the partially foamed product 5, therefore, the damping force to be applied to the product 5 can be adjusted to keep the internal pressure of the die 2 constant.

Preferably, as described above, the choke bar 23 should be provided at the cooling region 22 as part thereof, and may be suitably located in any position where the temperature of the partially foamed product 5 moving therein is lower than its softening point.

In the position where the temperature is lower than the softening point, the partially foamed product is increased in rigidity, as mentioned before, so that it can be kept in shape. Accordingly, the damping force can be effectively applied to the partially foamed product 5, so that the spontaneous pressure in the die 2, attributable to the decomposition of the foaming agent, can be efficiently retained.

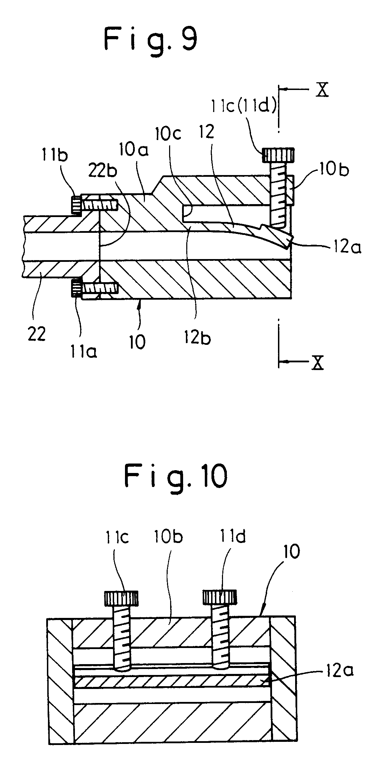

In order to maintain the internal pressure of the die 2, throttle means 10 of the construction shown in Fig. 9 and the sectional view of Fig. 10 taken along line X-X of Fig. 9 may be provided at the outlet 22b of the cooling region 22, instead of using the choke bar 23 shown in Figs. 7 and 8.

The throttle means 10, which has the same internal profile as the cooling region 22, is attached integrally to a flange portion of the region 22 by means of screws 11a and 11b.

An upper frame 10a of the throttle means 10 is formed having a stepped portion 10c which is raised toward an outlet end 10b. The stepped portion 10c is provided with a tongue 12 whose width is equal to that of the internal profile of the cooling region 22. A proximal end 12b of the tongue 12 is fixed to the stepped portion 10c so that a passage side face 12c of the tongue 12 is flush with the upper wall of the cooling region 22. The respective tip ends of screws 11c and 11d, which are screwed in the upper frame 10a near the outlet end 10b, abut against a distal end 12a of the tongue 12.

If the screws 11c and 11d of the throttle means 10 are adjusted so that the tongue 12 horizontally extends straight from its proximal end 12b, the partially foamed product 5 pushed out through the outlet of the cooling region 22 can be extruded without being damped by the throttle means 10. If the screws 11c and 11d are screwed in downward, however, the distal end 12a of the tongue 12 is pressed by the screws 11c and 11d, so that the tongue 12 bends downward with respect to the proximal end 12b. Accordingly, the internal profile of the throttle means 10 is continuously reduced in the vertical direction. Thus, the partially foamed product 5 pushed out through the outlet of the cooling region 22 is continuously contracted to be subjected to the damping force by the bent tongue 12.

In this manner, the contraction of the partially foamed product 5, that is, the damping force to be applied, can be freely adjusted by changing the depth of screwing of the screws 11c and 11d. Therefore, the damping force of a suitable magnitude can be applied corresponding to the extrusion state of the partially foamed product, so that the spontaneous pressure in the die 2, attributable to the decomposition of the foaming agent, can be suitably adjusted.

The throttle means 10 is superior to the choke bar 23 in that there is no difference in level or drastic change in sectional area in the vicinity of the junction to the outlet 22b of the cooling region 22.

Preferably, a lubricant is injected from an oiling pump 13 into the boundary between the molding region 20 and the heating region 21 through an oiling pipe 13a. By doing this, the lubricant is adhered to the outer peripheral surface of the molded product moving from the molding region 20 to the heating region 21. As the cross-linking of the partially foamed product 5 advances while the product moves through the heating region 21 and the cooling region 22, the melt viscosity of the partially foamed products 5 increases to increase the frictional resistance to the inner wall of the die 2 in the regions 21 and 22, and accordingly, the product 5 may cease to move downstream. The lubricant serves to prevent an increase of the head load of the extruder 1 and thus damage to the extruder.

Thus, by adhering the lubricant to the outer peripheral surface of the molded product from the molding region 20, the frictional resistance between the inner wall of the die 2 in the heating region 21 and the cooling region 22 and the partially foamed product 5 can be reduced to ensure a smooth downstream movement of the product.

The lubricant used for this purpose must be one which cannot be decomposed or evaporated by heat from the heating region 21, and is reluctant to melt into or deteriorate the molded product and chemically stable. For example, liquid polysiloxane, polyhydric alcohol such as ethylene glycol, alkyl ester, alkyl ether, or polyoxyalkylene may be used as the lubricant.

The lubricant injected into the molding region 20 reaches the outlet of the cooling region 22 without leaving the outer peripheral surface of the partially foamed product 5, whereupon it is scraped off by means of the choke bar bodies 24a and 24b or the tongue 12 of the throttle means 10. The lubricant removed from the surface of the partially foamed product is eliminated by suction using a suction pump 14, through a pipe 13b connected to the choke bar or the throttle means. Thereafter, the lubricant is filtered by means of a filter unit 13c, and is then injected again into the molding region 20 by means of the oiling pump 13.

If the lubricant is not removed in this manner, it remains on the partially foamed product 5 as it is introduced into the heating oven 3, thereby considerably damaging the external appearance of the resulting cross-linked thermoplastic resin foam 6.

The partially foamed product 5, thus extruded through the choke bar or the throttle means, is introduced into the heating oven 3 under normal pressure to be heated therein, so that uniform foaming around the frozen cell nuclei advances, whereupon the cross-linked thermoplastic resin foam 6 with uniform fine cells is obtained.

In the heating oven 3, which has a conventional structure, the partially foamed product 5 is transported by means of a belt conveyor 30 to be vertically reheated by means of heaters 31 and 32 on either side. The heaters 31 and 32 may be selected from ones of various types, such as infrared heaters, far-infrared heaters, hot-air heaters, etc. In Fig. 4, numeral 34 denotes circulating fans for circulating hot air in the oven.

The cross-linked thermoplastic resin foam 6 fully expanded in the heating oven 3 is shaped by means of shaping rollers 8 in the next stage, and is taken off by means of a take-off unit (not shown).

Example 1

A cross-linked thermoplastic resin foam was manufactured by using the manufacturing apparatus shown in Fig. 4. First, 100 parts by weight of low-density polyethylene (MI: 0.8 g/10 min; density: 0.920 g/cm³), 10 parts by weight of azodicarbonamide, and 1.0 part by weight of dicumyl peroxide were introduced into the extruder 1 (single-screwed; inside diameter: 75 mm; L/D = 28), and melted and mixed at 130°C, and the resulting resin composition was extruded into the die 2.

The molding region 20 of the die 2 is fitted with a coat hanger die, which can mold the resin composition from the extruder 1 into a flat plate of 150 mm width and 10 mm thickness, and its temperature is set at 130°C. The heating region 21, which has an overall length of 900 mm and a square straight profile 150 mm wide and 10 mm high, is adjusted to three stages of temperature, 150°C, 180°C, and 195°C, arranged downstream. A fixed amount of diethylene glycol, for use as the lubricant, was injected at the boundary between the outlet 1a of the extruder 1 and the molding region 20 by means of the oiling pump 13. The cooling region 22, which has an overall length of 700 mm, is of a tapered type, as shown in Fig. 5, having its internal profile gradually similarly reduced so that the internal sectional area ratio S2/S1 is 0.8. In the region 22, the partially foamed product is cooled to 50°C. The choke bar 23, as shown in Figs. 7 and 8, was attached to the outlet 22b of the cooling region 22, and the gap between the choke bar bodies 24a and 24b were adjusted so that the ratio of the sectional area between the choke bar bodies 24a and 24b to the inlet sectional area of the region 22 was 0.65. At this time, the indication of the pressure in the die 2 measured by means of the pressure gauge 24 in the heating region 21 was 35 kg/cm$^2$.

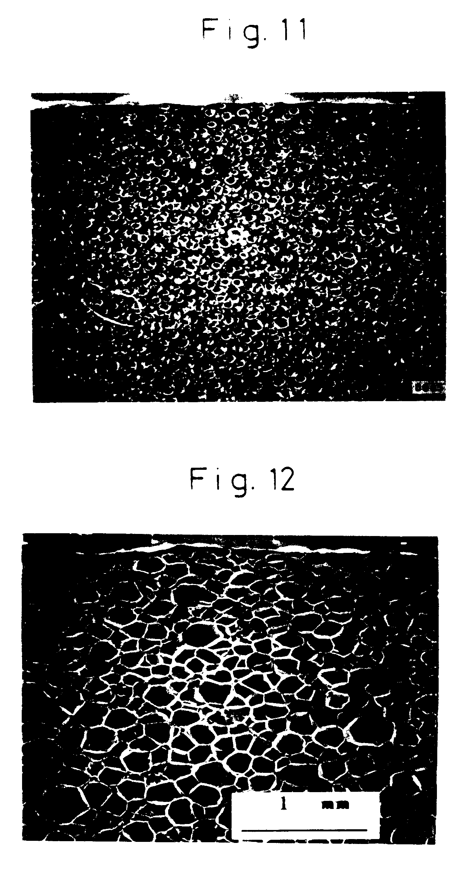

The partially foamed product 5 extruded from the choke bar 23 exhibited a residual gel weight fraction of 57%, bulk density of 0.455 g/cm$^3$, and expansion ratio M1 of 2.0. Fig. 11 shows a microphotograph of the sectional texture of the product 5. In the partially foamed product 5, fine cell nuclei with an average diameter of 36 $\mu$m are distributed at a density of 136 nuclei/mm$^2$ (average), and this distribution is uniform, as seen from Fig. 11.

Subsequently, the extruded partially foamed product 5 was continuously introduced into the heating oven 3 of 220°C to decompose the residual foaming agent, whereupon the cross-linked thermoplastic resin foam 6 was continuously obtained. The resulting cross-linked thermoplastic resin foam was a plate with 330 mm width and 22 mm thickness, exhibiting an bulk density of 0.057 g/cm$^3$ and expansion ratio M2 of 16.9. Thus, the ratio M1/M2 was 0.118. Fig. 12 shows a microphotograph of the sectional texture of the cross-linked thermoplastic resin foam 6. In the resulting foam 6, cells with an average diameter of 130 $\mu$m are distributed at a density of 59 cells/mm$^2$ (average), and this distribution is uniform, as seen from Fig. 12.

Example 2

The cross-linked thermoplastic resin foam 6 was continuously manufactured by the same method as in Example 1, except that the resin composition melted and mixed in the extruder 1 contained 85 parts by weight of low-density polyethylene (MI: 1.2 g/10 min; density: 0.920 g/cm$^3$), 15 parts by weight of another low-density polyethylene (MI: 4 g/10 min; density: 0.920 g/cm$^3$), 10 parts by weight of azodicarbonamide, and 0.8 part by weight of dicumyl peroxide, and that the choke bar gap was adjusted so that the overall sectional area ratio was 0.75 and the internal pressure of the die 2, measured by means of the pressure gauge 24, was 29 kg/cm$^2$.

The residual gel weight fraction, bulk density, and expansion ratio M1 of the partially foamed product 5 were 41%, 0.485 g/cm$^3$, and 1.9, respectively, and the average diameter and distribution density of the cell nuclei were 50 $\mu$m and 202 nuclei/mm$^2$, respectively.

The resulting cross-linked thermoplastic resin foam 6 was 311 mm wide and 20 mm thick, and exhibited a bulk density of 0.060 g/cm$^3$, average cell diameter of 150 $\mu$m, and expansion ratio M2 of 15.3. Thus, the ratio M1/M2 was 0.124.

Example 3

The cross-linked thermoplastic resin foam 6 was continuously manufactured by the same method as in Example 1, except that the overall length of the cooling region 22 and the set temperature were 1,300 mm and 30°C, respectively. In this case, the temperature of the partially foamed product 5 was lower than in the case of Example 1, so that the internal pressure of the die 2 was as high as 49 kg/cm$^2$.

The residual gel weight fraction, bulk density, and expansion ratio M1 of the partially foamed product 5 were 40%, 0.584 g/cm$^3$, and 1.7, respectively, and the average diameter and distribution density of the cell nuclei were 28 $\mu$m and 228 nuclei/mm$^2$, respectively.

The resulting cross-linked thermoplastic resin foam 6 was 325 mm wide and 23 mm thick, and exhibited a bulk density of 0.059 g/cm$^3$, average cell diameter of 130 $\mu$m, and expansion ratio M2 of 16.3. Thus, the ratio M1/M2 was 0.104.

Example 4

The cross-linked thermoplastic resin foam 6 was continuously manufactured by the same method as in Example 1, except that the resin composition melted and mixed in the extruder 1 contained 100 parts by weight of low-density polyethylene (MI: 1.2 g/10 min; density: 0.920 g/cm$^3$), 18 parts by weight of diazodicarbonamide, and 0.5 part by weight of dicumyl peroxide, and that three stages of set temperature, 150°C, 180°C, and 195°C, were arranged downstream in the heating region 21. In this case, the internal pressure of the die 2 was 40 kg/cm$^2$.

The residual gel weight fraction, bulk density, and expansion ratio M1 of the partially foamed product 5 were 64%, 0.576 g/cm$^3$, and 1.7, respectively, and the average diameter and distribution density of the cell nuclei were 76 $\mu$m and 154 nuclei/mm$^2$, respectively.

The resulting cross-linked thermoplastic resin foam 6 was 412 mm wide and 27 mm thick, and exhibited a bulk density of 0.033 g/cm$^3$, average cell diameter of 160 $\mu$m, and expansion ratio M2 of 29.7. Thus, the ratio M1/M2 was 0.057.

Example 5

The cross-linked thermoplastic resin foam 6 was continuously manufactured by the same method as in Example 1, except that the throttle means 10 shown in Figs. 9 and 10 was attached to the outlet of the cooling region 22, instead of using the choke bar, and that the bend of the tongue 12 was adjusted by means of the screws 11c and 11d so that the ratio of the sectional area of the outlet of the cooling region 22 defined by the tongue 12 to the inlet sectional area of the region 22 was 0.65. In this case, the internal pressure of the die 2 was 43 kg/cm$^2$.

The residual gel weight fraction, bulk density, and expansion ratio M1 of the partially foamed product 5 were 54%, 0.465 g/cm$^3$, and 2.1, respectively, and the average diameter and distribution density of the cell nuclei were 52 $\mu$m and 148 nuclei/mm$^2$, respectively.

The resulting cross-linked thermoplastic resin foam 6 was 311 mm wide and 22 mm thick, and exhibited a bulk density of 0.054 g/cm$^3$, average cell diameter of 130 $\mu$m, and expansion ratio M2 of 18. Thus, the ratio M1/M2 was 0.116.

Control 1

A cross-linked thermoplastic resin foam was manufactured in the same manner as in Example 1, except that the cooling region 22 was replaced with a straight cooling region having an outlet-to-inlet sectional area ratio of 1.0, and that the choke bar gap was adjusted so that the overall sectional area ratio was 1.0. In this case, the internal pressure of the die 2 was 5 kg/cm$^2$.

The residual gel weight fraction, bulk density, and expansion ratio M1 of the partially foamed product were 71%, 0.358 g/cm$^3$, and 2.69, respectively, and the average diameter and distribution density of the cell nuclei were 280 $\mu$m and 21 nuclei/mm$^2$, respectively.

The resulting cross-linked thermoplastic resin foam was 327 mm wide and 18.6 mm thick, and exhibited a bulk density of 0.055 g/cm$^3$, average cell diameter of 390 $\mu$m, and expansion ratio M2 of 17.4. Thus, the ratio M1/M2 was 0.155.

Control 2

A partially foamed product was extruded in the same manner as in Control 1, except that the choke bar gap was adjusted so that the overall sectional area ratio was 0.95, and that the temperature of the cooling region 22 was set at 100°C. In this case, the partially foamed product swelled drastically, thereby causing cracks in the surface, when it was pushed out through the outlet of the choke bar. Further, the internal pressure of the die 2 varied considerably, so that it was difficult to extrude the partially foamed product with stability.

Control 3

A cross-linked thermoplastic resin foam was manufactured in the same manner as in Control 1, except that the temperature of the heating region 21 was kept constant at 170°C. In this case, the internal pressure of the die 2 was 7 kg/cm$^2$.

The residual gel weight fraction, bulk density, and expansion ratio M1 of the partially foamed product were 0%, 0.925 g/cm$^3$, and 1.04, respectively, and the average diameter and distribution density of the cell nuclei were 357 $\mu$m and 2 nuclei/mm$^2$, respectively.

The resulting cross-linked thermoplastic resin foam was 330 mm wide and 22 mm thick, and exhibited a bulk density of 0.055 g/cm$^3$, average cell diameter of 1,300 $\mu$m, and expansion ratio M2 of 17.5. Thus, the ratio M1/M2 was 0.059.

Control 4

A partially foamed product was extruded in the same manner as in Control 1, except that three stages of set temperature, 160°C, 190°C, and 210°C, were arranged downstream in the heating region 21.

The state of a swell of the partially foamed product at the outlet of the choke bar was unstable, so that the molded product failed to be extruded straight, and its surface was cracked even though it was extruded, that is, the extrusion was extremely unstable. Thus, the partially foamed product was unable to be continuously introduced into the heating oven.

Part of the partially foamed product was cut off and heated to 220°C to be expanded under normal pressure. The residual gel weight fraction, bulk density, and expansion ratio M1 of this part of the molded product were 43%, 0.053 $g/cm^3$, and 18.3, respectively, and the average diameter and distribution density of the cell nuclei were 150 $\mu$m and 44 nuclei/mm$^2$, respectively. The resulting cross-linked thermoplastic resin foam exhibited a bulk density of 0.048 $g/cm^3$, average cell diameter of 160 $\mu$m, and expansion ratio M2 of 20. Thus, the ratio M1/M2 was 0.915.

Another part of the partially foamed product was cut off and heated to 220°C to be expanded under normal pressure. The residual gel weight fraction, bulk density, and expansion ratio M1 of this second part of the molded product were 40%, 57.5 $g/cm^3$, and 17.1, respectively, and the average diameter and distribution density of the cell nuclei were 184 $\mu$m and 29 nuclei/mm$^2$, respectively. The resulting cross-linked thermoplastic resin foam exhibited a bulk density of 52.8 $g/cm^3$, average cell diameter of 344 $\mu$m, and expansion ratio M2 of 18.7. Thus, the ratio M1/M2 of this part was 0.914.

Since these parts of the partially foamed product failed to fulfill the condition M1/M2 ≤ 0.525 (M1 ≥ 1.05, M2 ≥ 2), the extrusion was extremely unstable.

## Claims

1. A method for manufacturing a cross-linked thermoplastic resin foam, comprising the steps of:

    extruding a resin composition into a closed die (2), said resin composition containing at least a thermoplastic resin, a foaming agent, and a cross-linking agent, said die including at least a molding region (20), a heating region (21), and a cooling region (22), continuously arranged in the order named;

    molding said resin composition into a desired shape in said molding region (20) of said die (2);

    heating said resin composition in said heating region (21) of said die (2) to decompose said cross-linking agent and also to decompose at least part of said foaming agent so that cell nuclei are produced, thereby forming a partially foamed product;

    cooling said partially foamed product to a temperature lower than the softening point thereof in said cooling region (22) of said die (2), thereby increasing the rigidity of said partially foamed product, and extruding said partially foamed product, moving in said cooling region (22), to the outside of said die while applying a damping force to said partially foamed product; and

    heating said extruded partially foamed product (5) under atmospheric pressure to expand said foaming agent fully, thereby obtaining a final product.

2. A method as claimed in claim 1, wherein said resin composition is partially expanded so that there is a relation M1/M2 ≤ 0.525 (M1 ≥ 1.05, M2 ≥ 2.00), where M1 and M2 are the expansion ratios of said partially foamed product (5) and said final product respectively.

3. A method as claimed in claim 1 or claim 2, wherein said resin composition is partially expanded so that there is a relation 0.05 ≤ M1/M2 ≤ 0.35 between said values M1 and M2.

4. A method as claimed in any one of claims 1 to 3, wherein said resin composition is extruded into said die (2) so that the internal pressure (24) of said die (2) in said heating region (21) ranges from 10 to 70 kgf/cm$^2$.

5. A method as claimed in any one of claims 1 to 4, wherein said thermoplastic resin is a polyolefin.

6. An apparatus for manufacturing a cross-linked thermoplastic resin foam, said apparatus comprising:

    an extruder (1) for extruding a resin composition containing at least a thermoplastic resin, a foaming agent, and a cross-linking agent;

    a closed die (2) continuous with an outlet of said extruder (1) and including at least a molding region (20), a heating region (21), and a cooling region (22), so that said resin composition fed from said extruder (1) is molded into a desired shape in said molding region (20), said resin composition molded into said desired shape is heated in said heating region (21) to decompose said cross-linking agent and also to decompose at least part of said foaming agent so that cell nuclei are produced, thereby forming a partially foamed product (5), said partially foamed product (5) is cooled to a temperature lower than the softening point thereof in said cooling region (22), and a damping force is applied to said partially foamed product (5) when said cooled partially foamed product (5) moves in said cooling region (22); and

    heat foaming means for heating said partially foamed product (5), extruded from said die (2), under atmospheric pressure to expand said foaming agent fully, thereby obtaining a final product,

    said cooling region (22) of said die (2) including a sectional area portion narrower than the inlet sectional area thereof, on the outlet side of the position where said partially foamed product (5) is cooled to the temperature lower than the softening point thereof.

7. An apparatus as claimed in claim 6, wherein said cooling region (22) of said die (2) has a profile such that the sectional area of said partially foamed product moving through said cooling region gradually decreases.

8. An apparatus as claimed in claim 6 or claim 7, in which there is a relation $0.50 \leq S2/S1 \leq 0.90$, where S1 and S2 are the inlet sectional area of said cooling region and the sectional area of said cooling region at the position where said partially foamed product is cooled to the temperature lower than the softening point thereof respectively.

9. An apparatus as claimed in any one of claims 6 to 8, further comprising sectional area varying means located at said desired position of said cooling region (22), where said partially foamed product (5) is cooled to the temperature lower than the softening point thereof, and adapted to vary the sectional area of said partially foamed product (5), whereby said damping force is applied to said partially foamed product (5).

10. An apparatus as claimed in claim 9, wherein said sectional area varying means is a choke bar.

11. An apparatus as claimed in claim 9, wherein said sectional area varying means is means for continuously reducing the sectional area of the partially foamed product moving therein.

12. An apparatus as claimed in any one of claims 6 to 11, wherein said resin composition is partially expanded in said heating region (21) of said die (2) so that there is a relation $M1/M2 \leq 0.525$ ($M1 \geq 1.05$, $M2 \geq 2.00$), where M1 and M2 are the expansion ratios of said partially foamed product and said final product, respectively.

13. An apparatus as claimed in claim 12, wherein said composition is partially expanded so that there is a relation $0.05 \leq M1/M2 \leq 0.35$ between said values M1 and M2.

14. An apparatus as claimed in any one of claims 6 to 13, wherein said extruder (1) extrudes said resin composition into said die (2) under pressure so that the internal pressure (24) of said die (2) in said heating region (21) ranges from 10 to 70 kgf/cm$^2$.

15. An apparatus as claimed in any one of claims 6 to 14, wherein said thermoplastic resin is a polyolefin.

16. A moulded article manufactured from a cross-linked thermoplastic resin foam prepared by a process as claimed in claim 1.

**Patentansprüche**

1. Verfahren zur Herstellung eines vernetzten, thermoplastischen Kunststoffschaums, umfassend die Schritte:

Extrudieren einer Kunststoffmasse in eine geschlossene Preßform (2), wobei die Kunststoffmasse mindestens ein thermoplastisches Harz, ein Treibmittel und ein Vernetzungsmittel enthält, die Preßform mindestens einen Formbereich (20), einen Heizbereich (21) und einen Kühlbereich (22) einschließt, fortlaufend angeordnet in der genannten Reihenfolge;

Formen der Kunststoffmasse in eine gewünschte Form in dem Formbereich (20) der Preßform (2);

Erhitzen der Kunststoffmasse in dem Heizbereich (21) der Preßform (2) zur Zersetzung des Vernetzungsmittels und auch zur Zersetzung mindestens eines Teils des Treibmittels, so daß Zellkerne hergestellt werden, wodurch ein teilweise geschäumtes Produkt gebildet wird;

Kühlen des teilweise geschäumten Produkts auf eine Temperatur unterhalb des Erweichungspunktes davon in dem Kühlbereich (22) der Preßform (2), wodurch die Steifigkeit des teilweise geschäumten Produkts erhöht wird und Extrudieren des teilweise geschäumten Produktes, das sich in dem Kühlbereich (22) bewegt, zur Außenseite der Preßform, während eine Dämpfungskraft auf das teilweise geschäumte Produkt ausgeübt wird und

Erhitzen des extrudierten, teilweise geschäumten Produktes (5) unter Atmosphärendruck zur vollständigen Expansion des Treibmittels, wodurch das Endprodukt erhalten wird.

2. Verfahren nach Anspruch 1, wobei die Kunststoffmasse teilweise so aufgeschäumt wird, daß die Beziehung $M1/M2 \leq 0,525$ ($M1 \geq 1,05$, $M2 \geq 2,00$) vorliegt, wobei M1 und M2 die Expansionsverhältnisse des teilweise geschäumten Produkts (5) bzw. des Endprodukts darstellen.

3. Verfahren nach Anspruch 1 oder Anspruch 2, wobei die Kunststoffmasse teilweise derart aufgeschäumt wird, daß zwischen den Werten M1 und M2 die Beziehung 0,05 ≤ M1/M2 ≤ 0,35 vorliegt.

4. Verfahren nach einem der Ansprüche 1 bis 3, wobei die Kunststoffmasse in die Preßform (2) derart extrudiert wird, daß der Innendruck (24) der Preßform (2) in dem Heizbereich (21) im Bereich von 10 bis 70 kgf/cm$^2$ liegt.

5. Verfahren nach einem der Ansprüche 1 bis 4, wobei das thermoplastische Harz ein Polyolefin ist.

6. Vorrichtung zur Herstellung eines vernetzten, thermoplastischen Kunststoffschaums, wobei die Vorrichtung umfaßt:

einen Extruder (1) zur Extrusion einer Kunststoffmasse, enthaltend mindestens ein thermoplastisches Harz, ein Treibmittel und ein Vernetzungsmittel;

eine geschlossene Preßform (2), fortführend mit einem Auslaß des Extruders (1) verbunden und einschließend zumindest einen Formbereich (20), einen Heizbereich (21) und einen Kühlbereich (22), so daß die Kunststoffmasse, zugeführt von dem Extruder (1), in eine gewünschte Form in dem Formbereich (20) geformt wird, die zu der gewünschten Form geformte Kunststoffmasse in dem Heizbereich (21) zur Zersetzung des Vernetzungsmittels und auch zur Zersetzung mindestens eines Teils des Schäumungsmittels erwärmt wird, so daß Zellkerne erzeugt werden, wodurch ein teilweise geschäumtes Produkt (5) gebildet wird, das teilweise geschäumte Produkt (5) auf eine Temperatur unterhalb des Erweichungspunktes davon in dem Kühlbereich (22) gekühlt wird und eine Dämpfungskraft auf das teilweise geschäumte Produkt (5) ausgeübt wird, wenn das gekühlte, teilweise geschäumte Produkt (5) sich in dem Kühlbereich (22) bewegt; und

Heißschäumungsvorrichtungen zum Erwärmen des teilweise geschäumten Produktes (5), extrudiert aus der Preßform (2) unter Atmosphärendruck zur vollständigen Expansion des Treibmittels, wodurch das Endprodukt erhalten wird,

wobei der Kühlbereich (22) der Preßform (2), einen Querschnittsflächenanteil einschließt, der enger ist als die Einlaßquerschnittsfläche davon auf der Auslaßseite der Stelle, wo das teilweise geschäumte Produkt (5), auf eine Temperatur unterhalb des Erweichungspunktes davon gekühlt wird.

7. Vorrichtung nach Anspruch 6, wobei der Kühlbereich (22) der Preßform (2) ein derart ausgelegtes Profil aufweist, daß die Querschnittsfläche des teilweise geschäumten Produkts, das sich allmählich durch den Kühlbereich bewegt, abnimmt.

8. Vorrichtung nach Anspruch 6 oder Anspruch 7, wobei es eine Beziehung 0,50 ≤ S2/S1 ≤ 0,90 gibt, wobei S1 und S2 die Einlaßquerschnittsfläche des Kühlbereiches bzw. die Querschnittsfläche des Kühlbereiches an der Stelle, an der das teilweise geschäumte Produkt auf eine Temperatur unterhalb des Erweichungspunktes davon gekühlt wird, sind.

9. Vorrichtung nach einem der Ansprüche 6 bis 8, zusätzlich eine Vorrichtung zur Veränderung der Querschnittsfläche umfassend, angeordnet an der gewünschten Stelle des Kühlbereiches (22), wobei das teilweise geschäumte Produkt (5) auf eine Temperatur unterhalb des Erweichungspunktes davon gekühlt wird, und angepaßt zur Änderung der Querschnittsfläche des teilweise geschäumten Produktes (5), wodurch die Dämpfungskraft auf das teilweise geschäumte Produkt (5) ausgeübt wird.

10. Vorrichtung nach Anspruch 9, wobei die Vorrichtung zur Änderung der Querschnittsfläche ein Drosselstab ist.

11. Vorrichtung nach Anspruch 9, wobei die Vorrichtung zur Veränderung des Querschnitts eine Vorrichtung ist zur kontinuierlichen Verminderung der Querschnittsfläche des teilweise geschäumten Produktes, das sich darin bewegt.

12. Vorrichtung nach einem der Ansprüche 6 bis 11, wobei die Kunststoffmasse teilweise in dem Heizbereich (21) der Preßform (2) expandiert wird, so daß es eine Beziehung M1/M2 ≤ 0,525 (M1 ≥ 1,05, M2 ≥ 2,00) zutrifft, wobei M1 und M2 die Expansionsverhältnisse des teilweise geschäumten Produktes bzw. des Endproduktes sind.

13. Vorrichtung nach Anspruch 12, wobei die Zusammensetzung teilweise derart expandiert ist, so daß ein Verhältnis 0,05 ≤ M1/M2 ≤ 0,35 zwischen den Werten M1 und M2 vorliegt.

14. Vorrichtung nach einem der Ansprüche 6 bis 13, wobei der Extruder (1) die Kunststoffmasse in die Preßform (2) unter einem derartigen Druck extrudiert, daß der Innendruck (24) der Preßform (2) in dem Heizbereich (21) im Bereich von 10 bis 70 kgf/cm$^2$ liegt.

15. Vorrichtung nach einem der Ansprüche 6 bis 14, wobei das thermoplastische Harz ein Polyolefin ist.

16. Formgegenstand, gefertigt aus vernetztem, thermoplastischen Kunststoffschaum, hergestellt durch ein Verfahren nach Anspruch 1.

**Revendications**

1. Procédé de fabrication d'une mousse de résine thermoplastique réticulée, comprenant les étapes de :
   - extrusion d'une composition de résine dans une filière (2), ladite composition de résine contenant au moins une résine thermoplastique, un agent moussant, et un agent réticulant, ladite filière comprenant au moins une zone de moulage (20), une zone de chauffage (21), et une zone de refroidissement (22), disposées de façon continue dans l'ordre cité ;
   - moulage de ladite composition de résine selon une forme souhaitée dans ladite zone de moulage (20) de ladite filière (2) ;
   - chauffage de ladite composition de résine dans ladite zone de chauffage (21) de ladite filière (2), pour décomposer ledit agent réticulant et également pour décomposer au moins une partie dudit agent moussant, de sorte que des noyaux de cellule soient formés, ce par quoi on forme un produit partiellement expansé en mousse;
   - refroidissement dudit produit partiellement expansé en mousse à une température inférieure à son point de ramollissement dans ladite zone de refroidissement (22) de ladite filière (2), ce qui augmente la rigidité dudit produit partiellement expansé en de mousse, et extrusion dudit produit partiellement expansé en mousse en mouvement dans ladite zone de refroidissement (22) vers la sortie de ladite filière, en appliquant une force d'amortissement audit produit partiellement expansé en mousse ; et
   - chauffage dudit produit partiellement expansé sous forme de mousse extrudé (5) sous pression atmosphérique pour expanser totalement ledit agent moussant, ce qui conduit au produit final.

2. Procédé selon la revendication 1, dans lequel ladite composition de résine est partiellement expansé de manière à obtenir la relation M1/M2 ≤ 0,525 (M1 ≥ 1,05 M2 ≥ 2,00), dans laquelle M1 et M2 sont les taux d'expansion dudit produit partiellement expansé en forme de mousse (5) et dudit produit final, respectivement.

3. Procédé selon la revendication 1 ou 2, dans lequel ladite composition de résine est expansée partiellement de manière à obtenir la relation 0,05 ≤ M1/M2 < 0,35 entre lesdites valeurs de M1 et M2.

4. Procédé selon l'une quelconque des revendications 1 à 3, dans lequel ladite composition de résine est extrudée dans ladite filière (2) de façon à ce que la pression interne (24) de ladite filière (2) dans ladite zone de chauffage (21) soit de 10 à 70 kgf/cm$^2$.

5. Procédé selon l'une quelconque des revendications 1 à 4, dans lequel ladite résine thermoplastique est une polyoléfine.

6. Dispositif pour fabriquer une mousse de résine thermoplastique réticulée, comprenant :
   - une extrudeuse (1) pour extruder une composition de résine contenant au moins une résine thermoplastique, un agent moussant, et un agent réticulant ;
   - une filière (2) disposée en continuité avec une sortie de ladite extrudeuse (1) et comprenant au moins une zone de moulage (20) , une zone de chauffage (21) et une zone de refroidissement (22), de façon à ce que ladite composition alimentée par ladite extrudeuse (1) soit moulée selon une forme souhaitée dans ladite zone de moulage (20) ; ladite composition de résine moulée selon ladite forme souhaitée soit chauffée dans ladite zone de chauffage (21) pour décomposer ledit agent réticulant et également décomposer au moins une partie dudit agent moussant, de telle sorte que des noyaux de cellules soient formés, pour former un produit partiellement expansé en mousse (5) ; et ledit produit partiellement expansé en mousse (5) soit refroidi à une température inférieure à son point de ramollissement dans ladite zone de refroidissement (22), une force d'amortissement étant appliquée audit produit partiellement expansé en mousse (5) alors que ledit produit partiellement expansé en mousse (5) refroidi est en mouvement dans ladite zone de refroidissement (22) ; et

- des moyens de moussage par la chaleur pour chauffer ledit produit partiellement expansé en mousse (5), extrudé dans ladite filière (2), sous pression atmosphérique pour expanser totalement ledit agent moussant, pour obtenir un produit final,
- ladite zone de refroidissement (22) de ladite filière (2) comprenant, du côté de la sortie de l'endroit où ledit produit partiellement expansé en mousse (5) est refroidi à une température inférieure à son point de ramollissement, une portion de section inférieure à la section d'entrée de ladite zone de refroidissement.

7. Dispositif selon la revendication 6, dans lequel ladite zone de refroidissement (22) de ladite filière (2) a un profil tel que la section dudit produit partiellement expansé en mousse en mouvement à travers ladite zone de refroidissement diminue progressivement.

8. Dispositif selon la revendication 6 ou 7, dans lequel il y a une relation $0,50 \leq S2/S1 \leq 0,90$ dans laquelle S1 et S2 représentent la section à l'entrée de ladite zone de refroidissement et la section de ladite zone de refroidissement à l'endroit où ledit produit partiellement expansé en mousse est refroidi à la température inférieure à son point de ramollissement, respectivement.

9. Dispositif selon l'une quelconque des revendications 6 à 8, comprenant en outre des moyens pour faire varier la section, disposés audit endroit souhaité de ladite zone de refroidissement (22), où ledit produit partiellement expansé en mousse (5) est refroidi à la température inférieure à son point de ramollissement, et adaptés pour faire varier la section dudit produit partiellement expansé en mousse (5), pour appliquer ladite force d'amortissement audit produit partiellement expansé en mousse (5).

10. Dispositif selon la revendication 9, dans lequel lesdits moyens pour faire varier la section sont une barre d'étranglement.

11. Dispositif selon la revendication 9, dans lequel lesdits moyens pour faire varier la section sont des moyens pour réduire de façon continue la section du produit partiellement expansé en mousse en mouvement à l'intérieur de ces derniers.

12. Dispositif selon l'une quelconque des revendications 6 à 11, dans lequel ladite composition de résine est partiellement expansée dans ladite zone de chauffage (21) de ladite filière (2), de telle sorte qu'on obtienne une relation $M1/M2 \leq 0,525$ ($M1 \geq 1,05$, $M2 \geq 2,00$), dans laquelle M1 et M2 représentent les taux d'expansion dudit produit partiellement expansé en mousse et dudit produit final, respectivement.

13. Dispositif selon la revendication 12, dans lequel ladite composition est partiellement expansée de telle sorte qu'on obtienne une relation $0,05 \leq M1/M2 \leq 0,35$ entre lesdites valeurs de M1 et M2.

14. Dispositif selon l'une quelconque des revendications 6 à 13, dans lequel ladite extrudeuse (1) extrude ladite composition de résine dans ladite filière (2) sous une pression telle que la pression interne (24) à ladite filière (2) dans ladite zone de chauffage (21) est de 10 à 70 $kgf/cm^2$.

15. Dispositif selon l'une quelconque des revendications 6 à 14, dans lequel ladite résine thermoplastique est une polyoléfine.

16. Article moulé fabriqué à partir d'une mousse de résine thermoplastique réticulée, préparée par un procédé selon la revendication 1.

# Fig.1

CELL DIAMETER AFTER REHEATING (μm)

CELL NUCLEUS DIAMETER
AFTER PRESSURE REMOVAL (μm)

# Fig.2

CELL DIAMETER AFTER REHEATING (μm)

CELL NUCLEUS DISTRIBUTION
DENSITY (nuclei/mm²)

17

# Fig. 3

# Fig. 4

EP 0 476 798 B1

# Fig. 5A

# Fig. 5B

# Fig. 6

# Fig.7

# Fig.8

# Fig. 9

# Fig. 10

Fig. 11

Fig. 12